(19) **Europäisches Patentamt**

**European Patent Office**

**Office européen des brevets**

(11) **EP 0 658 774 B1**

(12) **FASCICULE DE BREVET EUROPEEN**

(45) Date de publication et mention
de la délivrance du brevet:
**15.03.2000 Bulletin 2000/11**

(51) Int. Cl.⁷: $G01S\ 13/87$, $G01S\ 13/04$

(21) Numéro de dépôt: **94402870.3**

(22) Date de dépôt: **13.12.1994**

(54) **Procédé et système de localisation**

Verfahren und Vorrichtung zum Orten

Location method and system

(84) Etats contractants désignés:
**BE DE FR GB GR IT**

(30) Priorité: **16.12.1993 FR 9315170**

(43) Date de publication de la demande:
**21.06.1995 Bulletin 1995/25**

(73) Titulaire: **ALCATEL CIT**
**75008 Paris (FR)**

(72) Inventeurs:
• **Maignan, Michel**
**F-91380 Chilly Mazarin (FR)**

• **Boby, Joel**
**F-93370 Montfermeil (FR)**

(74) Mandataire: **Bourely, Paul et al**
**c/o ALCATEL ALSTHOM,**
**Département de Propriété Industrielle,**
**30, avenue Kléber**
**75116 Paris (FR)**

(56) Documents cités:
**DE-A- 3 124 068         DE-A- 3 533 479**

## Description

La présente invention concerne la localisation d'un mobile se trouvant dans une zone prédéfinie. Cette zone constitue la zone d'utilisation d'un système permettant cette localisation. Le mobile à localiser est typiquement une pièce, une machine, un robot ou un homme susceptible d'être déplacé ou de se déplacer dans la zone d'utilisation du système. Cette invention s'applique plus particulièrement avec avantage dans les cas suivants :

- lorsque la zone d'utilisation du système a une forme générale allongée telle qu'une bande de terrain.
- lorsque cette zone d'utilisation est confinée c'est-à-dire séparée de l'espace libre et d'éventuels satellites de localisation par une paroi imperméable aux ondes électromagnétiques.
- Enfin lorsque plusieurs mobiles sont susceptibles de se déplacer simultanément dans cette zone d'utilisation et doivent être individuellement localisés.

Une telle zone d'utilisation allongée, confinée et parcourue par divers mobiles à localiser peut notamment être constituée par une galerie de mine, un tunnel ferroviaire ou routier, une galerie dans un bâtiment industriel ou d'habitation etc....

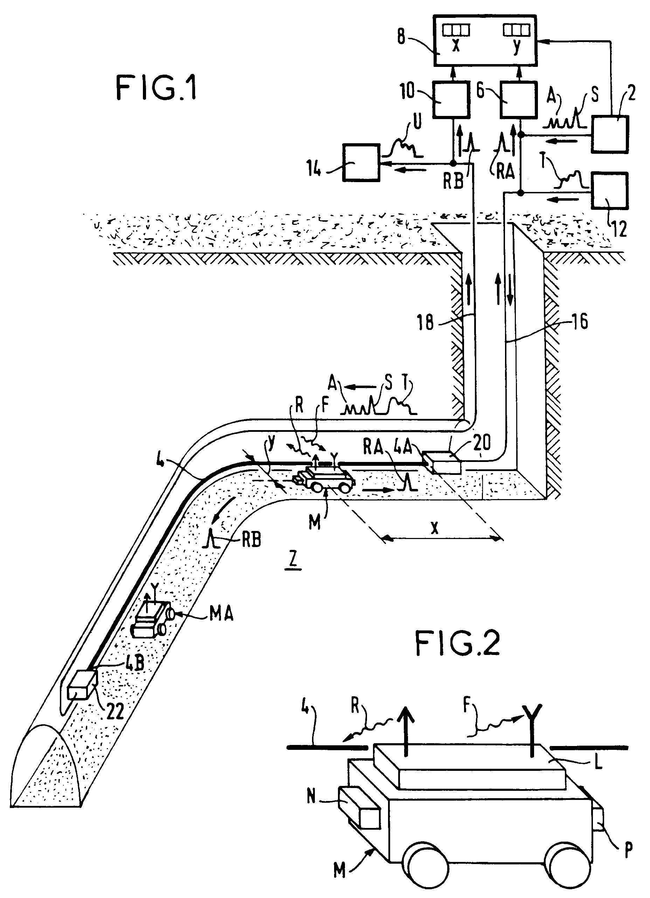

Un système de localisation est connu par le document DE-A-31 24 068 - LICENCIA PATENTVERWALTUNGS-GmbH. Il permet de localiser un mobile 5 (un véhicule ferroviaire) sur une voie ou section de voie non rectiligne 1. Pour cela on injecte un signal de sonde à l'instant $t_2$ dans un câble rayonnant confondu sur la figure 1 avec la voie 1 et on déduit l'abscisse du mobile du temps nécessaire pour recevoir, via ce même câble, une réponse émise par un répondeur actif 3 porté par ce mobile. Ce câble transmet aussi des signaux d'identification du mobile (instants $t_0$ et $t_4$) et diverses informations ($t_1$ et $t_5$). Des mesures sont effectuées à partir des deux extrémités du câble pour vérifier le bon fonctionnement du système. Ce système ne permet pas de localiser un mobile qui s'écarterait de la voie prévue.

La présente invention a notamment pour buts de permettre simplement de connaître plus complètement la position de mobiles tels que des travailleurs ou de machines dans un espace confiné allongée, et d'engager peu de frais supplémentaires pour cela lorsque un système de télécommunication doit être par ailleurs installé pour permettre de communiquer avec ces travailleurs ou machines.

Dans ces buts elle a notamment pour objet un procédé de localisation selon lequel :

- on munit un mobile à localiser d'un répondeur actif propre à répondre à un signal de sonde de nature électromagnétique en émettant un signal de réponse correspondant de nature électromagnétique,
- on injecte des dits signaux de sonde dans un câble rayonnant ayant une zone de couverture dans laquelle ledit mobile à localiser peut se trouver, l'injection de chaque tel signal de sonde étant effectuée à un instant de départ en un point de départ,
- on détecte des dits signaux de réponse en sortie dudit câble, la détection de chaque tel signal de réponse étant effectuée à un instant d'arrivée en un point d'arrivée,
- on mesure des temps de propagation de signal, chaque tel temps étant mesuré à partir de l'instant de départ d'un dit signal de sonde jusqu'à l'instant d'arrivée d'un signal de réponse correspondant,
- et on déduit desdits temps de propagation une abscisse d'une position dudit mobile, cette abscisse étant mesurée le long dudit câble à partir d'un point origine défini par rapport auxdits points de départ et d'arrivée,

ce procédé étant caractérisé par le fait que l'on mesure au moins deux dits temps de propagation choisis pour différer l'un de l'autre pour une même position dudit mobile, et l'on déduit de ces temps non seulement une dite abscisse, mais aussi une distance transversale de cette position à ce câble.

Selon une première possibilité le câble présente une première extrémité constituant ledit point de départ d'un dit signal de sonde, cette première extrémité et une deuxième extrémité de ce câble constituant respectivement deux dits points d'arrivée pour deux dits signaux de réponse correspondant à ce signal de sonde, ladite abscisse et ladite distance transversale étant déduits des deux temps de propagation qui sont mesurés jusqu'aux instants d'arrivée de ces deux signaux de réponse, respectivement.

Selon une deuxième possibilité 6 ledit câble présente une première et une deuxième extrémités constituant un premier et un deuxième dits points de départ d'un premier et d'un deuxième dits signaux de sonde, respectivement, cette première et cette deuxième extrémités constituant aussi un premier et un deuxième dits points d'arrivée pour un premier et un deuxième dit signaux de réponse correspondant à ce premier et à ce deuxième signal de sonde, respectivement, ladite abscisse et ladite distance transversale étant déduits des deux temps de propagation qui sont mesurés jusqu'aux deux instants d'arrivée de ces deux signaux de réponse, respectivement.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

La figure 1 représente une vue générale d'un système selon cette invention.

La figure 2 représente un détail de la figure 1.

Le système de localisation donné en exemple comporte les éléments suivants :

- Un émetteur de localisation 2 pour émettre un signal de sonde S constitué par une onde électromagnétique ayant une fréquence de sonde. L'émission de ce signal de sonde définit un instant de départ.
- Une ligne de sonde 4 s'étendant en présentant une longueur entre une première et une deuxième extrémités 4A et 4B. Des abscisses x sont mesurées selon cette longueur à partir de cette première extrémité. Un sens aller est défini de cette première à cette deuxième extrémité et un sens retour est opposé à ce sens aller. Cette ligne de sonde comporte un câble de sonde s'étendant comme cette ligne entre les mêmes extrémités 4A et 4B. Ce câble de sonde reçoit le signal de sonde S à sa première extrémité 4A. Il guide ce signal à une vitesse connue dans ledit sens aller. Il laisse sur toute sa longueur des fractions de l'énergie du signal de sonde s'échapper de ce câble et constituer des fractions de sonde rayonnées F. Ces fractions irradient une zone de couverture Z de ce câble, cette zone s'étendant le long de ce câble et au voisinage de celui-ci. Ceci permet de provoquer une interaction entre une telle fraction de sonde rayonnée et un mobile à localiser M se trouvant éventuellement dans cette zone en un lieu d'interaction. La ligne de sonde comporte en même temps un câble de réception qui est lui aussi un câble rayonnant s'étendant comme cette ligne entre les mêmes dites extrémités 4A et 4B et qui est lui aussi apte à guider à une vitesse connue des signaux d'interaction engendrés par ladite interaction. Ces signaux d'interaction constituent un signal d'interaction aller et un signal d'interaction retour se propageant dans ce câble de réception respectivement dans le sens aller et dans le sens retour.
- Un récepteur de localisation retour 6 connecté à la première extrémité du câble de réception. Ce récepteur reçoit le signal d'interaction retour et définit un instant d'arrivée retour représentatif de l'époque de réception de ce signal d'interaction retour.
- Enfin un compteur de temps 8 mesurant un temps de propagation contradirectionnelle séparant cet instant d'arrivée retour dudit instant de départ.

Ce système comporte en outre un répondeur de localisation L porté par le mobile à localiser M. Ce répondeur reçoit le signal de sonde S sous la forme d'une dite fraction de sonde F rayonnée par le câble de sonde 4. Il émet une réponse de localisation R constituée par une onde électromagnétique ayant une fréquence de réponse, cette réponse ayant une énergie supérieure à celle de cette fraction de sonde rayonnée. Cette réponse est reçue par le câble de réception. Elle s'y propage dans lesdits sens aller et retour sous la forme d'un signal de réponse aller RB et d'un signal de réponse retour RA, ces signaux constituant lesdits signaux d'interaction aller et retour, respectivement.

De préférence la fréquence de réponse est telle que le signal de réponse retour RA soit engendré et guidé dans le câble de sonde. Une sortie de ce câble de sonde est alors raccordée au récepteur de localisation retour 6 de sorte qu'un même câble rayonnant 4 constitue en même temps, comme représenté, lesdits câbles de sonde et de réception.

Le système comporte aussi un récepteur de localisation aller 10 connecté à la deuxième extrémité 4B du câble de réception 4 pour recevoir un dit signal de réponse aller RB. Ce récepteur définit en réponse un instant d'arrivée aller représentatif de l'époque de réception de ce signal de réponse aller par ce récepteur. Le compteur de temps 8 mesure alors un temps de propagation codirectionnelle séparant cet instant d'arrivée aller dudit instant de départ pour déduire des deux temps de propagation contradirectionnelle et codirectionnelle à la fois l'abscisse x du lieu d'interaction et une distance transversale y de ce lieu à partir de la ligne de sonde.

Plus spécifiquement, si on appelle TA et TB les temps de propagation contradirectionelle et codirectionelle, l'abscisse x et la distance y sont données par les relations suivantes :

$$x = A1.TA + B1.TB + C1$$

$$y = A2.TA + B2.TB + C2$$

A1, A2, B1, B2, C1 et C2 ayant des valeurs algèbriques constantes prédéterminées.

De préférence encore le système comporte plusieurs répondeurs de localisation L, LA tels que ledit répondeur de localisation L. Ces répondeurs sont prévus pour être portés par plusieurs mobiles à localiser tels que M et MA et ils ont des adresses respectives. L'émetteur de localisation 2 est alors apte à munir chaque signal de sonde de l'adresse A de l'un de ces répondeurs de localisation L. Chaque répondeur de localisation L est apte à reconnaître son adresse pour émettre une réponse de localisation R seulement en réponse à un signal de sonde muni de cette adresse.

De préférence encore le système de localisation est associé à un système de transmission qui peut avoir été antérieurement installé. Le système composite ainsi constitué comporte alors un émetteur d'information fixe 12. Cet émetteur reçoit une information centrifuge destinée au mobile à localiser M et il émet en réponse un signal informatif centrifuge guidé par la ligne de sonde 4 et portant cette information aller. Le répondeur de localisation L est alors associé à un récepteur d'information mobile N pour recevoir ce signal et pour fournir en réponse cette information centrifuge à ce mobile.

De préférence encore le répondeur de localisation L est associé avec un émetteur d'information mobile P. Cet émetteur reçoit une information centripète fournie par le mobile à localiser M et il émet en réponse un signal informatif centripète 4 portant cette information et apte à être reçu et guidé par la ligne de sonde 4. Le système composite comporte alors encore un récepteur d'information fixe 4 connecté à une extrémité de cette ligne de sonde pour recevoir ce signal informatif centripète et pour fournir en réponse cette information centripète.

Plus particulièrement le câble de sonde 4 est par exemple situé dans une galerie de mine. L'émetteur de localisation 6, les récepteurs de localisation 6 et 10, les émetteurs et récepteur d'information fixes 12 et 14 sont par exemple situés à la surface du sol. Ils sont connectés aux extrémités RA et RB du câble de sonde 4 par l'intermédiaire de câbles non rayonnants 16 et 18 et de circuits d'interfaces 20 et 22.

Le répondeur de localisation L et l'émetteur et le récepteur d'information P et N peuvent avantageusement,

contrairement à ce qui est représenté, être intégrés dans un même boîtier portable par un homme. Ils offrent ainsi simultanément les services de radiocommunications et de localisation.

Le système qui vient d'être décrit à titre d'exemple met en oeuvre seulement la première des deux possibilités précédemment mentionnées. Mais il pourrait de manière évidente être adapté à la mise en oeuvre de la deuxième de ces possibilités.

**Revendications**

1.  Procédé de localisation selon lequel :

    -   on munit un mobile à localiser (M) d'un répondeur actif (L) propre à répondre à un signal de sonde de nature électromagnétique en émettant un signal de réponse correspondant de nature électromagnétique,
    -   on injecte des dits signaux de sonde (S) dans un câble rayonnant (4) ayant une zone de couverture (Z) dans laquelle ledit mobile à localiser (M) peut se trouver, l'injection de chaque tel signal de sonde étant effectuée à un instant de départ en un point de départ,
    -   on détecte des dits signaux de réponse (RA) en sortie dudit câble, la détection de chaque tel signal de réponse étant effectuée à un instant d'arrivée en un point d'arrivée,
    -   on mesure des temps de propagation de signal, chaque tel temps étant mesuré à partir de l'instant de départ d'un dit signal de sonde jusqu'à l'instant d'arrivée d'un signal de réponse correspondant,

    -   et on déduit desdits temps de propagation une abscisse (X) d'une position dudit mobile, cette abscisse étant mesurée le long dudit câble à partir d'un point origine défini par rapport auxdits points de départ et d'arrivée, ce procédé étant caractérisé par le fait que l'on mesure au moins deux dits temps de propagation choisis pour différer l'un de l'autre pour une même position dudit mobile, et l'on déduit de ces temps non seulement une dite abscisse, mais aussi une distance transversale (Y) de cette position à ce câble.

2.  Procédé selon la revendication 1 dans lequel ledit câble présente une première extrémité constituant ledit point de départ d'un dit signal de sonde, cette première extrémité et une deuxième extrémité de ce câble constituant respectivement deux dits points d'arrivée pour deux dits signaux de réponse correspondant à ce signal de sonde, ladite abscisse et ladite distance transversale étant déduits des deux temps de propagation qui sont mesurés jusqu'aux instants d'arrivée de ces deux signaux de réponse, respectivement.

3.  Procédé selon la revendication 1 dans lequel ledit câble présente une première et une deuxième extrémités constituant un premier et un deuxième dits points de départ d'un premier et d'un deuxième dits signaux de sonde, respectivement, cette première et cette deuxième extrémités constituant aussi un premier et un deuxième dits points d'arrivée pour un premier et un deuxième dit signaux de réponse correspondant à ce premier et à ce deuxième signal de sonde, respectivement, ladite abscisse et ladite distance transversale étant déduits des deux temps de propagation qui sont mesurés jusqu'aux deux instants d'arrivée de ces deux signaux de réponse,

4.  Procédé selon l'une quelconque des revendications 1 à 3 caractérisé par le fait qu'il est mis en oeuvre de manière automatique.

**Claims**

1.  A location method in which:

        a moving body to be located (M) is provided with an active responder (L) capable of responding to an electromagnetic-type probe signal by transmitting a corresponding electromagnetic-type response signal;
        said probe signals (S) are injected into a radiating cable (4) that has a coverage zone (Z) in which said moving body to be located (M) may be located, each such probe signal being injected at a starting instant and at a starting point;

said response signals (RA) are detected at the output of said cable, each such response signal being detected at an ending instant and at an ending point; and

signal propagation times are measured, each such propagation time being measured from the starting instant of one of said probe signals to the ending instant of a corresponding response signal; and

an abscissa value (X) of a position of said moving body is deduced from said propagation times, the abscissa value being measured along said cable from an origin defined relative to said starting point and to said ending point; said method being characterized by the fact that at least two of said propagation times are measured, which times are chosen so as to be different from each other for the same position of said moving body, and not only is one of said abscissa values deduced from the times, but also a transverse distance (Y) from the position to the cable is deduced therefrom.

2. A method according to claim 1, in which said cable has a first end constituting said starting point of one of said probe signals, the first end and a second end of the cable constituting respective ones of said ending points for two of said response signals corresponding to the probe signal, said abscissa value and said transverse distance being deduced from the respective propagation times that are measured to the respective ending instants of the two response signals.

3. A method according to claim 1, in which said cable has a first end and a second end respectively constituting a first one of said starting points of a first one of said probe signals, and a second one of said starting points of a second one of said probe signals, the first end and the second end also respectively constituting a first one of said ending points for a first one of said response signals corresponding to said first probe signal, and a second one of said ending points for a second one of said response signals corresponding to said second probe signal, said abscissa value and said transverse distance being deduced from the two propagation times that are measured to the respective ending instants of the two response signals.

4. A method according to any one of claims 1 to 3, characterized in that it is implemented automatically.

**Patentansprüche**

1. Lokalisierungsverfahren, nach welchem:

   - ein zu lokalisierender beweglicher Körper (M) mit einem aktiven Antwortsender (L) versehen wird, der fähig ist, auf ein Sondensignal von elektromagnetischer Natur zu antworten, indem er ein entsprechendes Antwortsignal von elektromagnetischer Natur aussendet,

   - solche Sondensignale (S) in eine strahlende Leitung (4) mit einer Abdeckungszone (Z) eingekoppelt werden, in welcher sich der zu lokalisierende bewegliche Körper (M) befinden kann, wobei die Einkopplung jedes solchen Sondensignals zu einem Abgangszeitpunkt an einem Abgangspunkt erfolgt,

   - solche Antwortsignale (RA) am Ausgang der Leitung erfasst werden, wobei die Erfassung jedes solchen Antwortsignals zu einem Ankunftszeitpunkt an einem Ankunftspunkt erfolgt,

   - Ausbreitungszeiten des Signals gemessen werden, wobei jede solche Zeit ausgehend von Abgangszeitpunkt eines Sondensignals bis zum Ankunftszeitpunkt eines entsprechenden Antwortsignals gemessen wird,

   - und aus diesen Ausbreitungszeiten eine Abszisse (X) einer Position des beweglichen Körpers hergeleitet wird, wobei diese Abszisse entlang der Leitung ausgehend von einem Ursprung gemessen wird, der auf die Abgangs- und Ankunftspunkte bezogen definiert ist,

   dadurch gekennzeichnet, dass wenigstens zwei Ausbreitungszeiten gemessen werden, die so ausgewählt sind, dass sie sich für dieselbe Position des beweglichen Körpers unterscheiden, und aus diesen Zeiten nicht nur eine Abszisse, sondern auch ein seitlicher Abstand (Y) dieser Position von dieser Leitung hergeleitet wird,

2. Verfahren nach Anspruch 1, bei welchem die Leitung ein erstes Ende aufweist, das den Ausgangspunkt eines Sondensignals bildet, wobei dieses erste Ende und ein zweites Ende dieser Leitung jeweils zwei Ankunftspunkte für zwei diesem Sondensignal entsprechende Antwortsignale bilden, wobei die Abszisse und der seitliche Abstand aus zwei Ausbreitungszeiten hergeleitet werden, die jeweils bis zu den Ankunftszeitpunkten dieser beiden Antwortsignale gemessen werden.

3. Verfahren nach Anspruch 1, bei welchem die Leitung ein erstes und ein zweites Ende aufweist, die einen ersten und einen zweiten Abgangspunkt eines ersten bzw. eines zweiten Sondensignals bilden, wobei dieses erste und dieses zweite Ende auch einen ersten und einen zweiten Ankunftspunkt für ein erstes und ein zweites diesem ersten bzw. diesem zweiten Sondensignal entsprechendes Antwortsignal bilden, wobei die Abszisse und der seitliche Abstand aus zwei Ausbreitungszeiten hergeleitet werden, die bis zu den beiden Ankunftszeitpunkten dieser beiden Antwortsignale gemessen werden.

4. Verfahren nach einem der Ansprüche 1 bis 3, dadurch gekennzeichnet, dass es automatisch durchgeführt wird.

# FIG.1

# FIG.2